Europäisches Patentamt

European Patent Office

Office européen des brevets

(19)

(11) Veröffentlichungsnummer: **0 173 281**
**B1**

# (12) EUROPÄISCHE PATENTSCHRIFT

(45) Veröffentlichungstag der Patentschrift:
02.05.90

(21) Anmeldenummer: 85110691.4

(22) Anmeldetag: 26.08.85

(51) Int. Cl.⁴: **H04L 12/16**

(54) Verfahren zum Übertragen von Datensignalen.

(30) Priorität: 29.08.84 DE 3431794

(43) Veröffentlichungstag der Anmeldung:
05.03.86 Patentblatt 86/10

(45) Bekanntmachung des Hinweises auf die Patenterteilung:
02.05.90 Patentblatt 90/18

(84) Benannte Vertragsstaaten:
AT CH DE IT LI NL SE

(56) Entgegenhaltungen:
EP-A- 0 017 035
EP-A- 0 046 259

PATENT ABSTRACTS OF JAPAN, Band 6,
Nr. 147 (E-123)[1025], 6. August 1982; &
JP-A-57 68 949 (FUJITSU K.K.) 27-04-1982

(73) Patentinhaber: Siemens Aktiengesellschaft,
Wittelsbacherplatz 2, D-8000 München 2(DE)

(72) Erfinder: Franz, Dietmar, Dipl.-Ing., Edelweissstrasse 66,
D-8039 Puchheim(DE)

**Beschreibung**

Die Erfindung betrifft ein Verfahren zum Übertragen von Datensignalen zwischen an einer Datenvermittlungsanlage angeschlossenen Teilnehmerstellen bzw. Übertragungsleitungen und einer ebenfalls an der Datenvermittlungsanlage über eine Mehrzahl von Verbindungsleitungen angeschlossenen Signalbehandlungseinrichtung, insbesondere einer Signalumsetzeinrichtung oder Rundsendeeinrichtung, mit einer der Anzahl der Verbindungsleitungen entsprechenden Anzahl von Übertragungskanälen, deren Freizustände bzw. Belegtzustände angebende Zustandssignale in der Datenvermittlungsanlage festgehalten werden, wobei mit Auftreten einer Verbindungsanforderung von einer Teilnehmerstelle bzw. über eine Übertragungsleitung für die Übertragung von Datensignalen zu einem Übertragungskanal hin das Vorhandensein von Freizustandssignalen in der Datenvermittlungsanlage ermittelt wird und wobei ein den Freizustand eines Übertragungskanals angebendes Freizustandssignal mit Belegung des betreffenden Übertragungskanals in ein Belegtzustandssignal geändert wird, welches erst bei Wiederbelegungsfähigkeit des betreffenden Übertragungskanals in ein Freizustandssignal geändert wird.

Es ist bereits ein Verfahren zum Herstellen von Verbindungen von an einer Datenvermittlungsanlage angeschlossenen Teilnehmerstellen bzw. Übertragungsleitungen zu Signalumsetzern bekannt (DE-OS 3030887). Bei dem bekannten Verfahren wird im Zuge des Aufbaues einer Verbindung zwischen Signale mit unterschiedlichen Prozeduren übertragenden Teilnehmerstellen ein zu diesem Zeitpunkt freier Signalumsetzer belegt. Dieser Signalumsetzer ist dann in der Datenvermittlungsanlage so lange als belegt gekennzeichnet, bis von diesem nach einer erfolgten Weiterleitung der ihm zuvor für eine Signalumsetzung zugeführten Signale ein Freimeldesignal abgegeben wird. Erst bei Empfang dieses Freimeldesignals wird der betreffende Signalumsetzer in der Datenvermittlungsanlage wieder als im Freizustand sich befindend gekennzeichnet. Lediglich in diesem Freizustand steht dann der Signalumsetzer wieder für eine Einbeziehung in eine Verbindung zur Verfügung. Da der Freizustand aber erst nach einer erfolgten Weiterleitung der umzusetzenden Signale eingenommen wird, hängt die Dauer der Belegung im wesentlichen von den zwischen den Teilnehmerstellen und dem Signalumsetzer abzuwickelnden Übertragungsprozeduren ab. Wie aus "Nachrichtentechnische Zeitschrift", Band 33, (1980), Heft 4, Seiten 214 bis 220 hervorgeht, können beispielsweise die für eine Signalübertragung zwischen Telex- und Teletex-Teilnehmerstellen unter Einbeziehung eines Signalumsetzers erforderlichen Übertragungsprozeduren einen nicht unerheblichen Zeitaufwand mit sich bringen.

Darüber hinaus ist es bereits bekannt, z.B. aus der Zusammenfassung der Japanischen Patentanmeldung JP-A-57-68949, für mehrere Endeinrichtungen einen gemeinsamen Speicher bereitzustellen.

Es ist nun Aufgabe der vorliegenden Erfindung, einen Weg zu zeigen, wie bei einem Verfahren der eingangs genannten Art die Belegungsdauer der Übertragungskanäle der Signalbehandlungseinrichtung reduziert werden kann.

Gelöst wird die vorstehend aufgezeigte Aufgabe bei einem Verfahren der eingangs genannten Art erfindungsgemäß dadurch, daß die über einen der betreffenden Übertragungskanäle aufgenommenen zu behandelnden Datensignale in einen für die Aufnahme von Datensignalen dem betreffenden Übertragungskanal gerade zugeteilten Speicherbereich eines eine Mehrzahl von den Übertragungskanälen wahlfrei zuteilbaren Speicherbereichen aufweisenden Speichers übernommen werden, daß nach dieser Übernahme dem betreffenden Übertragungskanal für eine erneute Übernahme zu behandelnder Datensignale ein weiterer Speicherbereich zugeteilt und für diesen Übertragungskanal ein Freimeldesignal an die Datenvermittlungsanlage abgegeben wird, durch welches das den Belegtzustand dieses Übertragungskanals angebende Belegtzustandssignal in ein Freizustandssignal geändert wird, und daß ein für die Aufnahme von Datensignalen dem betreffenden Übertragungskanal zugeteilter Speicherbereich nach einer Behandlung und Weiterleitung dieser Datensignale wieder freigegeben wird.

Die Erfindung bringt den Vorteil mit sich, daß ein für eine Signalübertragung belegter Übertragungskanal der Leitungsbehandlungseinheit nicht erst nach Weiterleitung der zu behandelnden Datensignale, sondern bereits nach der Übernahme dieser Datensignale in den diesem Übertragungskanal zugeteilten Speicherbereich von der Datenvermittlungsanlage her wieder freigegeben wird. Auf diese Weise steht ein Übertragungskanal auch während der Behandlung und Weiterleitung der über ihn aufgenommenen Datensignale wieder für eine Behandlung von Datensignalen zur Verfügung. Damit kann für eine Behandlung der über eine Datenvermittlungsanlage zu übertragenden Datensignale eine Signalbehandlungseinheit verwendet werden, welche eine wesentlich geringere Anzahl von Übertragungskanälen aufweist als eine Signalbehandlungseinheit, deren Übertragungskanäle erst nach der Weiterleitung der über sie aufgenommenen Datensignale wieder freigegeben werden.

Für eine Bearbeitung der für die einzelnen Übertragungskanäle an die Datenvermittlungsanlage abgegebenen Freimeldesignale ist es zweckmäßig, daß die Freimeldesignale für sämtliche Übertragungskanäle über einen zentralen Signalisierungskanal zu der Datenvermittlungsanlage hin übertragen werden.

Anhand einer Zeichnung wird die Erfindung nachstehend am Beispiel einer Signalumsetzeinrichtung näher erläutert.

In der Zeichnung ist ausschnittsweise eine Fernschreib- und Datenvermittlungsanlage EDS dargestellt. Von dieser Fernschreib- und Datenvermittlungsanlage sind lediglich zu einer ersten Gruppe von Anschlußschaltungen gehörende Anschlußschaltungen SAGA1, SAGAm, SAGAn, zu einer zweiten Gruppe von Anschlußschaltungen gehörende Anschlußschaltungen SAGD1, SAGD2, SAGDm und SAGDn, den einzelnen Gruppen von Anschlußschaltungen zugehörige Eingabe-/Ausgabe-Codewandler EACW bzw. EACD, eine Übertragungsablaufsteuerung UEAS, eine Speichereinheit SE und eine Programmsteuereinheit PE angedeutet. Die mit dem Eingabe-/Ausgabe-Codewandler EACW verbundenen Anschlußschaltungen (SAGA1 bis SAGAn) dienen dazu, digitale Datensignale polaritätswechselweise zu verarbeiten. Die mit dem anderen Eingabe-/Ausgabe-Codewandler EACD verbundenen Anschlußschaltungen dienen dagegen zur Verarbeitung von sogenannten Bitgruppen. Diese Bitgruppen sind jeweils eine Mehrzahl von Bits, beispielsweise 8 Bits, umfassende digitale Datensignale, die auch als Envelopes bezeichnet werden. Die Aufgabe dieser Eingabe-/Ausgabe-Codewandler besteht unter anderem darin, über die einzelnen Anschlußschaltungen zugeführte Signale zu dem eigentlichen Verarbeitungsteil der Fernschreib- und Datenvermittlungsanlage EDS weiterzuleiten bzw. von diesem Verarbeitungsteil her über die Anschlußschaltungen abzugebende Signale weiterzuleiten. Die Eingabe-/Ausgabe-Codewandler sind hierzu mit der Übertragungsablaufsteuerung UEAS verbunden. Diese Übertragungsablaufsteuerung steuert den Signalaustausch zwischen den Eingabe-/Ausgabe-Codewandlern und der Speichereinheit SE, die bestimmte, ihr von der Übertragungsablaufsteuerung zugeführte Signale an die Programmsteuereinheit PE weiterleitet. Außerdem gibt die Speichereinheit SE die ihr von der Programmsteuereinheit zugeführten Signale an die Übertragungsablaufsteuerung UEAS ab.

Von den Polaritätswechsel verarbeitenden Anschlußschaltungen sind einige mit Teilnehmereinrichtungen verbunden, welche digitale Signale mit einer ersten Datenübertragungsprozedur abgeben bzw. aufnehmen. Bei diesen Teilnehmereinrichtungen mag es sich um übliche Fernschreib- bzw. Telex-Endgeräte handeln, von denen in der Zeichnung eines mit Tx angedeutet ist. Diese Telex-Endgeräte mögen mit einer Datenübertragungsrate von 50 Bd und unter Ausnutzung des internationalen Telegraphenalphabets Nr. 2 arbeiten, also mit einem Start-Stop-Datenformat. Das Telex-Endgerät Tx ist dabei beispielsweise über eine Leitungsanordnung an der Anschlußschaltung SAGA1 angeschlossen. Eine solche Anschlußschaltung ermöglicht im allgemeinen den Anschluß einer Mehrzahl von Telex-Endgeräten. Zur Vereinfachung der Zeichnung ist jedoch lediglich ein Anschluß angedeutet. Diese Vereinfachung gilt im übrigen auch für die anderen in der Zeichnung dargestellten Anschlußschaltungen.

Mit einigen der digitale Datensignale in Form von Bitgruppen bzw. Envelopes verarbeitenden Anschlußschaltungen sind Teilnehmereinrichtungen verbunden, die digitale Nachrichtensignale mit einer zweiten Datenübertragungsprozedur abgeben bzw. aufnehmen, und zwar seriell in Form von Bitgruppen bzw. Envelopes. Bei diesen Teilnehmereinrichtungen mag es sich um sogenannte Bürofernschreibstationen handeln, die auch als Teletex-Endgeräte bezeichnet werden. In der Zeichnung ist ein derartiges Teletex-Endgerät mit Ttx bezeichnet. Dieses Teletex-Endgerät ist an der Anschlußschaltung SAGD1 angeschlossen. Auch für diese Anschlußschaltung, gilt wieder, daß an ihr noch weitere Teletex-Endgeräte angeschlossen sein können. Bezüglich der Teletex-Endgeräte sei angemerkt, daß diese beispielsweise seriell auftretende digitale Datensignale entsprechend dem internationalen Alphabet IA Nr. 5 mit einer Datenübertragungsrate von beispielsweise 2400 bit/s abgeben und aufnehmen können, und zwar als synchrone Datensignale.

An die genannten Anschlußschaltungen können auch anstelle von Telex-Endgeräten bzw. Teletex-Endgeräten Übertragungsleitungen angeschlossen sein, die die Fernschreib- und Datenvermittlungsanlage EDS mit weiteren Datenvermittlungsanlagen verbindet.

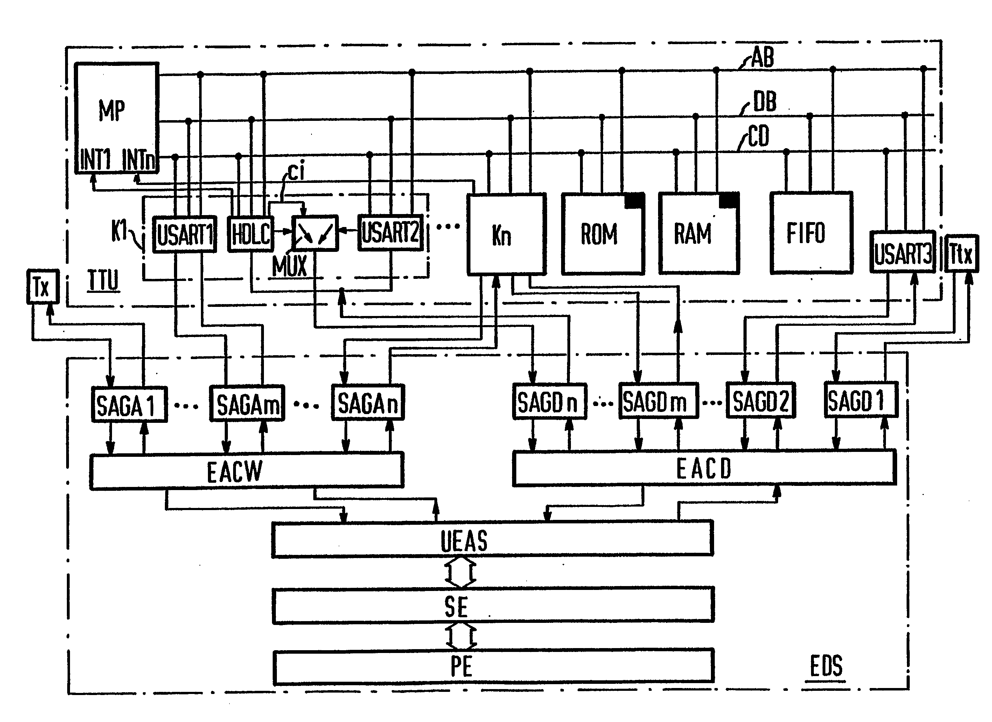

Mit der in der Zeichnung dargestellten Fernschreib- und Datenvermittlungsanlage EDS ist als Signalbehandlungseinrichtung eine Signalumsetzeinrichtung TTU verbunden. Diese Signalumsetzeinrichtung dient bei der Datensignalübertragung zwischen Telex-Endgeräten und Teletex-Endgeräten zur Datenübertragungsprozedur- und Datenformatumsetzung. Die Signalumsetzeinrichtung weist dazu einen Mikroprozessor MP auf, der an ein Busleitungssystem angeschlossen ist. Dieses Busleitungssystem besteht aus einem Adreßbus AB, einem Datenbus DB und einem Steuerbus CB. An dieses Busleitungssystem ist eine Mehrzahl von Übertragungskanälen K1 bis Kn angeschlossen. Von diesen Übertragungskanälen sind in der Zeichnung lediglich die Übertragungskanäle K1 und Kn dargestellt. Der interne Aufbau dieser Übertragungskanäle, der in der Zeichnung lediglich für den Übertragungskanal K1 angegeben ist, entspricht dem internen Aufbau der in der DE-OS 2912652 beschriebenen Umsetzeinrichtung. So weist jeder der Übertragungskanäle zwei Anschlußseiten auf. Eine der Anschlußseiten wird durch eine Schnittstellenschaltung USART1 gebildet, die den jeweiligen Übertragungskanal eingangs- und ausgangsseitig mit einer zu der ersten Gruppe von Anschlußschaltungen der Fernschreib- und Datenvermittlungsanlage EDS gehörenden Anschlußschaltung verbindet. In Fig. 1 ist der Übertragungskanal K1 über diese Schnittstellenschaltung mit der Anschlußschaltung SAGAm und der Übertragungskanal Kn mit der Anschlußschaltung SAGAn verbunden.

Die zweite Anschlußseite jedes der Übertragungskanäle besteht aus einer Schnittstellenschaltung USART2, einer Datenübertragungsschaltung HDLC und einer Datenweiche MUX.

Die Schnittstellenschaltung und die Datenübertragungsschaltung sind dabei mit ihren einen Eingängen gemeinsam am Ausgang einer zu der zweiten Gruppe von Anschlußschaltungen der Fernschreib- und Datenvermittlungsanlage EDS gehörenden Anschlußschaltung angeschlossen. In der Zeichnung sind die genannten Schaltungen des Übertragungskanals K1 mit dem Ausgang der Anschlußschaltung SAGDn verbunden. In entsprechender Weise ist der Übertragungskanal Kn an den Ausgang der Anschlußschaltung SAGDm angeschlossen. Eingangsseitig steht die Anschlußschaltung SAGDn mit der Datenweiche MUX des Übertragungskanals K1 in Verbindung. In entsprechender Weise ist der Eingang der Anschlußschaltung SAGDm mit der in dem Übertragungskanal Kn vorhandenen Datenweiche verbunden.

Die Datenweiche eines Übertragungskanals ist mit ihren Eingängen an Ausgänge der Schnittstellenschaltung USART2 und der Datenübertragungsschaltung HDLC des betreffenden Übertragungskanals angeschlossen. Mit einem Steuereingang ci ist die Datenweiche MUX zusätzlich an einem Steuerausgang der Datenübertragungsschaltung HDLC angeschlossen. Je nachdem, welches Steuersignal dem Steuereingang der Datenweiche zugeführt wird, verbindet diese ihren Ausgang entweder mit dem Ausgang der Schnittstellenschaltung USART2 oder mit dem Ausgang der Datenübertragungsschaltung HDLC.

Wie bereits erwähnt, sind die Übertragungskanäle K1 bis Kn über das interne Busleitungssystem der Signalumsetzeinrichtung TTU mit dem Mikroprozessor MP verbunden. Über dieses Busleitungssystem erfolgt die Signalübertragung von bzw. zu dem Mikroprozessor hin. Der Mikroprozessor ist außerdem mit seinen Unterbrechungseingängen INT1 bis INTn an jeweils einen Steuerausgang der in den Übertragungskanälen vorhandenen Datenübertragungsschaltungen HDLC angeschlossen. Über diese Verbindungen kann der Mikroprozessor MP in seinem Betrieb von den Datenübertragungsschaltungen her veranlaßt werden, die Abwicklung von Datenübertragungsvorgängen zu steuern.

An das Busleitungssystem der Signalumsetzeinrichtung TTU ist außerdem eine Speicheranordnung mit entsprechenden Anschlüssen angeschlossen. Zu dieser Speicheranordnung gehört ein Festwertspeicher ROM, in dem die für den Betrieb der Signalumsetzeinrichtung erforderliche Befehlsfolge für den Mikroprozessor gespeichert ist. Daneben ist ein Speicher RAM mit wahlfreiem Zugriff vorgesehen. Bei diesem Speicher handelt es sich um einen Schreib-/Lese-Speicher. Er dient, wie im folgenden noch näher erläutert werden wird, zur Zwischenspeicherung von Datensignalen, die bei einer Signalübertragung zwischen Telex-Endgeräten und Teletex-Endgeräten umzusetzen sind. Schließlich gehört zu der Speicheranordnung noch ein Durchlaufspeicher FIFO. In diesem Durchlaufspeicher werden, wie im folgenden noch erläutert werden wird, von den einzelnen Übertragungskanlen K1 bis Kn an die Fernschreib- und Datenvermittlungsanlage EDS abzugebende Meldesignale zwischengespeichert.

Mit dem bereits erwähnten Busleitungssystem der Signalumsetzeinrichtung TTU ist schließlich noch eine weitere Schnittstellenschaltung USART3 verbunden. Über diese Schnittstellenschaltung werden von den Übertragungskanälen abgegebene Meldesignale zu der Fernschreib- und Datenvermittlungsanlage hin übertragen. Die Schnittstellenschaltung ist hierfür mit einer zu der zweiten Gruppe von Anschlußschaltungen der Fernschreib- und Datenvermittlungsanlage gehörenden Anschlußschaltung verbunden. In der Zeichnung ist diese Anschlußschaltung mit SAGD2 bezeichnet.

Nachdem zuvor der Aufbau der in der Zeichnung dargestellten Schaltungsanordnung erläutert worden ist, sei nunmehr die Arbeitsweise dieser Schaltungsanordnung näher betrachtet. Hierzu wird zunächst davon ausgegangen, daß digitale Daten signale von dem Teletex-Endgerät Ttx aus zu dem Telex-Endgerät Tx zu übertragen sind. Die hierzu für einen Verbindungsaufbau erforderlichen Kommunikationen zwischen dem Teletex-Endgerät und der Fernschreib- und Datenvermittlungsanlage EDS werden entsprechend der CCITT-Empfehlung X.21 durchgeführt. Aus den im Zuge des Verbindungsaufbaues von dem Teletex-Endgerät her übertragenen Wählzeichen geht hervor, daß eine Verbindung zu einem Telex-Endgerät gewünscht ist, d.h. daß eine Umsetzung der Übertragungsprozedur vorzunehmen ist. Solche Wählzeichen werden in der Fernschreib- und Datenvermittlungsanlage EDS als solche erkannt. Auf die Funktionen der Fernschreib- und Datenvermittlungsanlage wird hier nicht näher eingegangen. Diese Funktionen sind bereits hinlänglich bekannt (siehe beispielsweise "Siemens- Zeitschrift", Heft 2, 1977, Seiten 82 bis 87).

Bei Erkennen von Verbindungswünschen belegt die Fernschreib- und Datenvermittlungsanlage EDS einen bis dahin freien Übertragungskanal der Signalumsetzeinrichtung TTU, z.B. den Übertragungskanal K1. Für die Speicherung der Freizustände bzw. Belegtzustände der Übertragungskanäle kann in der Fernschreib- und Datenvermittlungsanlage eine Schaltungsanordnung vorgesehen sein, wie sie bereits in der DE-OS 3030887 beschrieben worden ist. Bei Verwendung einer solchen Schaltungsanordnung ist jedem Übertragungskanal eine Registerzelle eines Registers zugeordnet, in welche ein Freizustandssignal bzw. ein Belegtzustandssignal eintragbar ist. Befindet der Übertragungskanal sich beispielsweise in einem Freizustand, so wird bei Belegung dieses Übertragungskanals das in der zugehörigen Registerzelle des gerade erwähnten Registers eingetragene Freizustandssignal in ein Belegtzustandssignal geändert. Dieses Belegtzustandssignal bewirkt, daß der betreffende Übertragungskanal nicht in weitere Verbindungen einbezogen werden kann.

Nach der Belegung des Übertragungskanals K1 leitet die Fernschreib- und Datenvermittlungsanlage EDS die für den weiteren Verbindungsaufbau erforderlichen Signalisierungsinformationen (z.B. Wählzeichen) an den Übertragungskanal K1 weiter. Die Weiterleitung solcher Signalisierungsinformationen erfolgt dabei gemäß der CCITT-Empfehlung X.71, d.h. es wird eine sogenannte Zwischenamtssignalisierung durchgeführt. Nach einem erfolgten Aufbau der Verbindung zwischen dem Übertragungskanal und dem Teletex-Endgerät beginnt das Teletex-Endgerät Ttx mit der Übertragung der Datensignale über die Fernschreib- und Datenvermittlungsanlage zu dem Übertragungskanal K1 hin. Diese Datensignale werden in einen dem Übertragungskanal K1 gerade zugeteilten Speicherbereich des Schreib-/Lese-Speichers RAM übernommen. In diesen Speicherbereich werden außerdem Angaben bezüglich des Empfängers dieser Datensignale, hier des Telex-Endgerätes Tx, eingetragen. Diese Angaben ergeben sich aus den dem Übertragungskanal K1 übergebenen Signalisierungsinformationen.

Der Schreib-/Lese-Speicher RAM der Signalumsetzeinrichtung TTU weist eine Vielzahl von den einzelnen Übertragungskanälen K1 bis Kn zuteilbaren Speicherbereichen auf. Die Zuteilung erfolgt dabei durch den Mikroprozessor MP wahlfrei. Eine gerade gewählte Zuteilung kann beispielsweise in einem gesonderten Speicherbereich des Schreib-/Lese-Speichers RAM hinterlegt sein.

Nach der Übernahme der von dem Teletex-Endgerät Ttx übertragenen Datensignale in den dem Übertragungskanal K1 gerade zugeteilten Speicherbereich wird die zwischen dem Übertragungskanal K1 und dem Teletex-Endgerät Ttx bestehende Verbindung entsprechend den genannten Signalisierungsprozeduren (CCITT-Empfehlungen X.21 und X.71) abgebaut.

Die im Zuge der zwischen der Fernschreib- und Datenvermittlungsanlage EDS und dem Übertragungskanal K1 bestehenden Verbindung übertragenen Signalisierungsinformationen werden im übrigen von der Schnittstellenschaltung USART2 aufgenommen bzw. abgegeben. Sie erhält hierfür von dem Mikroprozessor MP her entsprechende Steuersignale zugeführt. Mit Hilfe dieser Schnittstellenschaltung werden im wesentlichen die in serieller Form von der Fernschreib- und Datenvermittlungsanlage her abgegebenen Bitgruppen in eine parallele Form umgesetzt, in der sie von dem Mikroprozessor verarbeitet werden. In entsprechender Weise werden die von dem Mikroprozessor her in paralleler Form bereitgestellten Signalisierungsinformationen in serielle Bitgruppen umgesetzt und an die Fernschreib- und Datenvermittlungsanlage abgegeben.

Während der Übertragung von Signalisierungsinformationen ist die Datenweiche MUX von der Datenübertragungsschaltung HDLC so gesteuert, daß die von der Schnittstellenschaltung USART2 abgegebenen seriellen Bitgruppen zu der Fernschreib- und Datenvermittlungsanlage hin übertragen werden können. Diese Datenübertragungsschaltung ermöglicht eine gesicherte Übertragung der umzusetzenden Datensignale. Für eine gesicherte Übertragung ist hier eine sogenannte HDLC-Prozedur vorgesehen. Die bei dieser Prozedur zusammen mit den Datensignalen übertragenen Sicherungssignale werden in der Datenübertragungsschaltung HDLC überprüft und von den übrigen Datensignalen abgetrennt. Lediglich die Datensignale werden dann in der dargestellten Weise in einen freien Speicherbereich des Schreib-/Lese-Speichers RAM aufgenommen. Das Auftreten von Datensignalen wird dem Mikroprozessor im übrigen an seinem in Frage kommenden Unterbrechungseingang (INT) durch ein von der Datenübertragungsschaltung abgegebenes Unterbrechungssignal signalisiert.

Nach dem Abbau der vorstehend erläuterten Verbindung zwischen der Fernschreib- und Datenvermittlungsanlage und dem Übertragungskanal K1 wird diesem Übertragungskanal für die Übernahme von im Zuge einer weiteren Verbindung zu übertragenden Datensignalen ein weiterer Speicherbereich des Schreib-/Lese-Speichers RAM zugeteilt, welcher bisher noch nicht durch aufgenommene Datensignale belegt ist. Die Auswahl hierfür trifft der Mikroprozessor MP, indem er in dem bereits genannten gesonderten Speicherbereich des Schreib-/Lese-Speichers RAM einen freien Speicherbereich ermittelt und diesen durch einen entsprechenden Eintrag dem Übertragungskanal K1 zuteilt. Nach dieser Zuteilung wird von dem Mikroprozessor MP her ein Freimeldesignal für den Übertragungskanal K1 abgegeben. Dieses Freimeldesignal, das auch Angaben bezüglich des als frei zu meldenden Übertragungskanals enthält, wird zunächst in dem bereits erwähnten Durchlaufspeicher FIFO gespeichert. Dieser Durchlaufspeicher wird von dem Mikroprozessor MP her in vorgegebenen Zeitabständen für das Auslesen von in ihm gespeicherten Freimeldesignale angesteuert. Dabei können Freimeldesignale für eine beliebige Anzahl von Übertragungskanälen zwischengespeichert sein. Die Anzahl hängt davon ab, wie viele Übertragungskanäle gerade in eine Verbindung mit der Fernschreib- und Datenvermittlungsanlage EDS einbezogen sind. Ausgelesen werden diese Freimeldesignale dann in der Reihenfolge des Einschreibens.

Mit jeder Ansteuerung des Durchlaufspeichers FIFO übernimmt der Mikroprozessor MP jeweils ein Freimeldesignal und leitet dieses an die Schnittstellenschaltung USART3 weiter. Diese Schnittstellenschaltung setzt das ihr in paralleler Form zugeführte Freimeldesignal dann in eine serielle Form um und leitet dieses an die Anschlußschaltung SAGD2 der Fernschreib- und Datenvermittlungsanlage weiter. Auf ein derartiges Freimeldesignal hin wird dann in der Fernschreib- und Datenvermittlungsanlage das für den in Frage kommenden Übertragungskanal gespeicherte Belegtzustandssignal wieder in ein Freizustandssignal geändert. Für den hier betrachteten Fall, daß der Übertragungskanal K1 in eine Verbindung einbezogen ist, bedeutet, das daß dieser Übertragungskanal bei Eintreffen des für ihn abgegebenen Freimeldesignals wieder für eine neue Belegung freigegeben wird. Damit steht dann der Übertragungskanal K1 noch vor der Weiterleitung der über ihn aufgenommenen Datensignale für eine erneute Datensignalaufnahme zur Verfügung. Aufgrund einer solchen vorzeitigen Freigabe der Übertragungskanäle kann die beschriebene Signalumsetzeinrichtung TTU mit einer wesentlich geringeren Anzahl von Übertragungskanälen ausgestattet sein als eine herkömmliche Signalumsetzeinrichtung, bei der die Freigabe der Übertragungskanäle erst nach einer Signalweiterleitung erfolgt.

Für die Weiterleitung der zuvor über den nunmehr freigegebenen Übertragungskanal K1 aufgenommenen Datensignale wird von dem Mikroprozessor MP her eine Verbindung über die Fernschreib- und Datenvermittlungsanlage EDS zu dem Telex-Endgerät Tx aufgebaut. Die Verbindung verläuft dabei über die Schnittstellenschaltung USART1, die wiederum eine Umsetzung der ihr in paralleler Form zugeführten Signale in serielle Signale bzw. ihr in serieller Form zugeführten Signale in parallele Signale vornimmt. Nach dem Aufbau der Verbindung zu dem Telex-Endgerät hin werden dann die für den Übertragungskanal K1 in dem Schreib-/Lese-Speicher RAM gespeicherten Datensignale von dem Mikroprozessor ausgelesen und dabei in von Telex-Endgeräten verarbeitbare Datensignale umgesetzt. Diese umgesetzten Datensignale werden anschließend über die Schnittstellenschaltung USART1 eines freien Übertragungskanals und die Fernschreib- und Datenvermittlungsanlage EDS zu dem Telex-Endgerät Tx hin übertragen. Nach dieser Übertragung wird dann die bestehende Verbindung in der für Telex-Verbindungen vorgegebenen Weise ausgelöst und der für die Speicherung der übertragenen Datensignale reservierte Speicherbereich des Schreib-/Lese-Speichers wieder freigegeben.

Bisher wurden lediglich die Verfahrensschritte für eine Übertragung von Datensignalen von dem Teletex-Endgerät Ttx zu dem Telex-Endgerät Tx hin erläutert. Den genannten Verfahrensschritten entsprechende Verfahrensschritte sind auch auszuführen, wenn Datensignale in der Gegenrichtung zu übertragen sind. In diesem Fall werden die zu übertragenden Datensignale nach einem entsprechenden Verbindungsaufbau über die Schnittstellenschaltungs USART1 des in Frage kommenden Übertragungskanals aufgenommen. Nach einer Umsetzung in von Telex-Endgeräten verarbeitbare Datensignale erfolgt dann eine Weiterleitung an die zugehörige Datenübertragungsschaltung HDLC. Diese Datenübertragungsschaltung fügt den weiterzuleitenden Datensignalen der Datensicherung dienende Signale an und gibt die daraus resultierenden Signale in serieller Form über die Datenweiche MUX an die Fernschreib- und Datenvermittlungsanlage EDS ab. Von hier aus erfolgt dann eine Weiterleitung der Signale an das Teletex-Endgerät.

Die Weiterleitung der zunächst über einen Übertragungskanal der Signalumsetzeinrichtung TTU aufgenommenen Datensignale an ein Telex-Endgerät bzw. Teletex-Endgerät braucht im übrigen nicht über denselben Übertragungskanal zu erfolgen. Es kann auch von dem Mikroprozessor MP her ein beliebiger für eine Weiterleitung von Datensignalen gerade nicht benutzter Übertragungskanal benutzt werden. Hierfür kann beispielsweise in dem Schreib-/Lese-Speicher RAM der Signalumsetzeinrichtung TTU eine Tabelle mit den für eine Weiterleitung von Datensignalen freien Übertragungskanälen hinterlegt sein, die ständig aktualisiert wird.

Die Funktionsweise der Signalumsetzeinrichtung TTU wurde anhand der Signalübertragung über den Übertragungskanal K1 erläutert. Von den zur Verfügung stehenden Übertragungskanälen kann jedoch eine beliebige Anzahl gleichzeitig für eine Datensignalübertragung mit der Fernschreib- und Datenvermittlungsanlage EDS in Verbindung stehen. Die einzelnen Übertragungskanäle werden hierfür durch den Mikroprozessor MP innerhalb eines vorgegebenen Zyklus nacheinander bearbeitet.

Bezüglich des Anschlusses der Signalumsetzeinrichtung TTU sei darauf hingewiesen, daß für eine Datensignalübertragung zwischen einem Telex-Endgerät und einem Teletex-Endgerät die Fernschreib- und Datenvermittlungsanlage auch aus einer Mehrzahl von Vermittlungseinrichtungen gebildet sein kann, die lediglich den Anschluß eines einzigen Endgerätetyps zulassen. In diesem Fall sind dann in Vermittlungseinrichtungen miteinander verbindende Übertragungsleitungen Übertragungskanäle einer oder mehrerer Signalumsetzeinrichtungen geschaltet. Mit anderen Worten, die Übertragungskanäle sind dann nur einseitig mit Anschlußschaltungen der in der Zeichnung dargestellten Vermittlungsstelle verbunden. Die andere Seite der Übertragungskanäle ist jeweils an eine Anschlußschaltung einer weiteren Vermittlungsstelle angeschlossen.

Für die Schaltungselemente der vorstehend erläuterten Signalumsetzeinrichtung TTU können kommerziell erhältliche Bausteine verwendet werden. Für die Schnittstellenschaltungen USART1 bis USART3 können Bausteine mit der Bezeichnung 8251A der Firma Intel verwendet werden. Die Datenübertragungsschaltung HDLC kann durch einen Baustein mit der Bezeichnung 8273 der Firma Intel gebildet sein. Die Weichenschaltung MUX kann eine herkömmliche Multiplexerschaltung sein, wie sie beispielsweise unter der Bezeichnung SN74151 bekannt ist. Der Lesespeicher (Programmspeicher) ROM kann durch Bausteine mit der Bezeichnung 2732 der Firma Intel gebildet sein und der Schreib-/Lese-Speicher Bausteine mit der Bezeichnung 2185 der Firma Intel gebildet sein. Als Durchlaufsspeicher FIFO können ein oder mehrere Bausteine des Typs F9403 der Firma Fairchild eingesetzt werden. Als Mikroprozessor MP kann schließlich ein solcher des Typs 8085 der Firma Intel verwendet werden.

Vorstehend wurde das Verfahren zur Übertragung von Datensignalen gemäß der Erfindung am Beispiel einer Signalumsetzeinrichtung erläutert. Dieses Verfahren ist jedoch auch allgemein bei Anschluß von Signalbehandlungseinrichtungen an eine Datenvermittlungsanlage anwendbar, wenn diese Signalbehandlungseinrichtungen die zu behandelnden Signale zunächst zwischenspeichern und anschließend diese mit oder ohne Umsetzung weiterleiten. Die Weiterleitung kann dabei entweder automatisch gegebenenfalls mit einer Zeitvorgabe (verzögerte Weiterleitung) oder aufgrund eines gezielten Abrufes durch autorisierte Personen erfolgen. Als Beispiele seien hier genannt eine Rundsendeeinrichtung, die an eine Mehrzahl von Teilnehmerstellen weiterzuleitende Datensignale zugeführt erhält, und eine Einrichtung für den elektronischen Briefdienst, in der von autorisierten Personen abrufbare Nachrichten (Datensignale) zwischengespeichert sind.

## Patentansprüche

1. Verfahren zum Übertragen von Datensignalen zwischen an einer Datenvermittlungsanlage (EDS) angeschlossenen Teilnehmerstellen (Ttx, Tx) bzw. Übertragungsleitungen und einer ebenfalls an der Datenvermittlungsanlage über eine Mehrzahl von Verbindungsleitungen angeschlossenen Signalbehandlungseinrichtung (TTU), insbesondere einer Signalumsetzeinrichtung oder Rundsendeeinrichtung, mit einer der Anzahl der Verbindungsleitungen entsprechenden Anzahl von Übertragungskanälen (K1 bis Kn), deren Freizustände bzw. Belegtzustände angebende Zustandssignale in der Datenvermittlungsanlage festgehalten werden, wobei mit Auftreten einer Verbindungsanforderung von einer Teilnehmerstelle bzw. über eine Übertragungsleitung für die Übertragung von Datensignalen zu einem Übertragungskanal hin das Vorhandensein von Freizustandssignalen in der Datenvermittlungsanlage ermittelt wird und wobei ein den Freizustand eines Übertragungskanals angebendes Freizustandssignal mit Belegung des betreffenden Übertragungskanals in ein Belegtzustandssignal geändert wird, welches erst bei Wiederbelegungsfähigkeit des betreffenden Übertragungskanals in ein Freizustandssignal geändert wird, **dadurch gekennzeichnet,** daß die über einen der betreffenden Übertragungskanäle (z.B. K1) aufgenommenen zu behandelnden Datensignale in einen für die Aufnahme von Datensignalen dem betreffenden Übertragungskanal gerade zugeordneten Speicherbereich eines eine Mehrzahl von den Übertragungskanälen wahlfrei zuteilbaren Speicherbereichen aufweisenden Speichers (RAM) übernommen werden, daß nach dieser Übernahme dem betreffenden Übertragungskanal (K1) für eine erneute Übernahme zu behandelnder Datensignale ein weiterer Speicherbereich zugeteilt und für diesen Übertragungskanal ein Freimeldesignal an die Datenvermittlungsanlage (EDS) abgegeben wird, durch welches das den Belegtzustand dieses Übertragungskanals angebende Belegtzustandssignal in ein Freizustandssignal geändert wird, und daß ein für die Aufnahme von Datensignalen dem betreffenden Übertragungskanal (K1) zugeteilter Speicherbereich nach einer Behandlung und Weiterleitung dieser Datensignale über einen gegebenenfalls von dem betreffenden Übertragungskanal (K1) abweichenden Übertragungskanal (z.B. K2) wieder freigegeben wird.

2. Verfahren nach Anspruch 1, **dadurch gekennzeichnet,** daß Freimeldesignale für sämtliche Übertragungskanäle (K1 bis Kn) über einen zentralen Signalisierungskanal zu der Datenvermittlungsanlage (EDS) hin übertragen werden.

## Claims

1. Method for transmitting data signals between subscriber stations (Ttx, Tx) or transmission lines connected to a data switching system (EDS) and a signal processing device (TTU), particularly a signal converter device or multi-addressing device, which is also connected to the data switching system via a plurality of junction lines, comprising a number of transmission channels (K1 to Kn) which corresponds to the number of junction lines and the status signals of which, which indicate idle states or busy states, are stored in the data switching system, wherein on the occurrence of a connection request from a subscriber station or via a transmission line for the transmission of data signals to a transmission channel, the presence of idle-status signals in the data switching system is determined and wherein an idle-status signal indicating the idle state of a transmission channel is changed, when the relevant transmission channel is seized, into a busy-status signal which is only changed into an idle-status signal when the relevant transmission channel becomes ready to be seized again, characterized in that the data signals to be processed, which are received via one of the relevant transmission channels (i.e.K1) are transferred into a storage area, which has just been allocated to the relevant transmission channel for the reception of data signals, of a memory (RAM) which exhibits a plurality of storage areas which can be optionally allocated to the transmission channels, that after this transfer, a further storage area is allocated to the relevant transmission channel (K1) for another transfer of data signals to be processed and an idle status indication signal for this transmission channel is emitted to the data switching system (EDS), by means of which signal the busy-status signal indicating the busy state of this transmission channel is changed into an idle-status signal, and that a storage area allocated to the relevant transmission channel (K1) for the reception of data signals is released again after processing and forwarding of these data signals via a transmission channel (i.e. K2) which may differ from the relevant transmission channel (K1).

2. Method according to Claim 1, characterized in that idle status indication signals for all transmission channels (K1 to Kn) are transmitted to the data switching system (EDS) via a common signalling channel.

## Revendications

1. Procédé pour transmettre des signaux de données entre des postes d'abonnés (Ttx,Tx) ou des lignes de transmission, raccordés à une installation de commutation de données (EDS), et un dispositif (TTU) de traitement des signaux, raccordé également à l'installation de commutation de données par l'intermédiaire d'une multiplicité de lignes de jonction, notamment un dispositif de conversion de signaux ou un dispositif d'émission omnidirectionnelle, comportant un nombre, qui correspond au nombre des lignes de jonction, de canaux de transmission (K1 à Kn), dont le signaux d'état, indiquant des états libres ou des états occupés, sont maintenus dans l'installation de commutation de données, et dans lequel, lors de l'apparition d'une demande de liaison de la part d'un poste d'abonné ou par l'intermédiaire d'une ligne de transmission pour une transmission de signaux de données en direction d'un canal de transmission, la présence de signaux d'état libre dans l'installation de commutation de données est déterminée, et selon lequel un signal d'état libre, indiquant l'état libre d'un canal de transmission est modifié, sous l'effet de l'occupation du canal de transmission considéré, en un signal d'état occupé, qui est transformé en un signal d'état libre uniquement lorsqu'il existe une possibilité de réoccupation du canal de transmission considéré, caractérisé par le fait que les signaux de données devant être traités, qui sont reçus par l'intermédiaire des canaux de transmission considérés (par exemple K1), sont transférés dans une zone, précisément associée au canal de transmission considéré, pour la transmission de signaux de données, d'une mémoire (RAM) possédant une multiplicité de zones pouvant être affectées librement aux canaux de transmission,

qu'après ce transfert, une autre zone de la mémoire est affectée au canal de transmission considéré (K1) pour une nouvelle prise en charge de signaux de données devant être traités, et que, pour ce canal de transmission, un signal de signalisation d'état libre est envoyé à l'installation de commutation de données (EDS), ce signal provoquant la transformation du signal d'état occupé, indiquant l'état occupé de ce canal de transmission, en un signal d'état libre, et

qu'une zone de la mémoire, affectée au canal de transmission considéré (K1) pour la réception de signaux de données, est à nouveau libérée après un traitement et une retransmission de ces signaux de données par l'intermédiaire d'un canal de transmission (par exemple K2), qui diffère éventuellement du canal de transmission considéré (K1).

2. Procédé suivant la revendication 1, caractérisé par le fait que des signaux de signalisation d'états libres pour tous les canaux de transmission (K1 à Kn) sont transmis par l'intermédiaire d'un canal central de signalisation à l'installation de commutation de données (EDS).